# EUROPÄISCHE PATENTSCHRIFT

(11) **EP 0 691 365 B1**
(45) Veröffentlichungstag und Bekanntmachung des Hinweises auf die Patenterteilung: **08.04.1998**
(21) Anmeldenummer: 94110303.8
(22) Anmeldetag: 02.07.1994
(51) Int. Cl.: C08J 3/24, C08L 83/05, C08L 83/07

(54) **Verfahren zum Herstellen eines geschäumten oder ungeschäumten Silikonelastomers, insbesondere für Dichtungszwecke**
Process for the preparation of foamed or non-foamed silicone elastomers, especially for sealing
Procédé de préparation d'élastomère de silicone, moussée ou nonmoussée, en particulier pour l'étanchéité

(43) Veröffentlichungstag der Anmeldung: 10.01.1996
(73) Patentinhaber: ERNST SONDERHOFF GmbH & Co. KG, D-50829 Köln (DE)
(72) Erfinder: Giesen, Franz Josef, D-50129 Bergheim-Fliesteden (DE)
(74) Vertreter: Vollbach, Hans, Dipl.-Ing.

(56) Entgegenhaltungen:
- US-A- 4 916 169
- US-A- 5 169 727

## Beschreibung

Die Erfindung betrifft ein Verfahren zum Herstellen eines geschäumten oder ungeschäumten Silikonelastomers mit hohem elastischen Rückstellvermögen, insbesondere zum Herstellen von Dichtungselementen aus einem solchen Silikonelastomer, unter Verwendung eines zweikomponentigen, additionsvernetzenden und platinkatalysierten Silikonsystems, dadurch gekennzeichnet, daß ein Verfahren gemäß Anspruch 1 verwendet wird.

Verfahren der gattungsgemäßen Art sind bekannt und werden in der Praxis auch zur Herstellung von Silikondichtungen eingesetzt. Beispielsweise ist aus der EP 0 416 229 ein Verfahren zum Herstellen eines feinporigen, weichelastischen Silikon-Dichtungsschaumes für Deckel-, Gehäuse- und Hohlraumdichtungen bekannt, bei dem die Schaumstoff-Reaktionskomponenten mittels einer Niederdruck-Zweikomponenten-Misch- und Dosieranlage verarbeitet und im Freischäumungsverfahren ohne Wärmezufuhr in situ zur Aufschäumung gebracht werden, wobei die eine Reaktionskomponente ein Silikonpolymer mit mindestens zwei Vinylgruppen je Molekül, einen organischen Platinkatalysator sowie ggf. weitere Zusätze enthält, während die andere Komponente Wasserstoffsiloxan als Vernetzer enthält. Bei diesem Verfahren enthält das Reaktionsgemisch als zusätzliches Vernetzungs- und Treibmittel Wasser in einer gering dosierten Menge. Die Wasserzugabe bewirkt bei der Schäumungsreaktion einen hohen Wasserstoff-Treibeffekt.

Die Anforderungen, die z.B. in der Automobil-, Haushaltsgeräte-, Leuchten- oder Medizinaltechnik an die Festigkeitseigenschaften und vor allem an ein gutes elastisches Rückstellvermögen (d.h. einen niedrigen Compression Set) der Dichtung gestellt werden, sind zumeist außerordentlich hoch. Es ist daher in der Vergangenheit dem Problem, Silikondichtungen zu schaffen, die diesen hohen Anforderungen genügen und sich auch unproblematisch in situ herstellen lassen, sehr viel Aufmerksamkeit gewidmet worden.

Verfahren, bei denen einkomponentige Silikonsysteme zum Einsatz kommen, arbeiten durchweg mit langen Reaktionszeiten, die mindestens mehrere Stunden, vielfach mehrere Tage betragen. Diese langen Reaktionszeiten erschweren und verteuern die Massenfertigung der Silikondichtungen.

Bei Verwendung zweikomponentiger additionsvernetzender Silikonmassen, nämlich platinkatalysierter Vinyl/SiH-Silikonelastomere, lassen sich bei Raumtemperatur kurze Aushärtungszeiten erreichen. Das elastische Rückstellvermögen dieser Dichtungen ist allerdings für viele Einsatzzwecke ungenügend. Im Silikonelastomer zurückbleibende Wasserstoffbindungen führen beim späteren Einsatz der Dichtungen bei Druck- und/oder Wärmebelastung derselben zu einer unerwünschten Nachvernetzung und als Folge davon zu einer Herabsetzung des elastischen Rückstellvermögens der Dichtung. Es ist daher erforderlich, Silikondichtungen dieser Art nach ihrer Aushärtung einer Wärmebehandlung, d.h. einer Temperung über mehrere Stunden oder sogar mehrere Tage bei Temperaturen von 150° bis 200°C zu unterwerfen, um den Restwasserstoff abzuspalten und auf diese Weise die Nachvernetzung zu unterdrükken und ein möglichst hohes elastisches Rückstellvermögen der Dichtungen, d.h. einen niedrigen Compression Set zu erreichen. Radikalisch vernetzende Zweikomponenten-Silikonelastomere (2K-HTV) reagieren bei Raumtemperatur verhältnismäßig langsam und benötigen höhere Ausheiztemperaturen. Sie sind aufgrund der Sauerstoffinhibierung bei der Herstellung kleinerer Dichtungsmassen, wie z.B. Dichtringe oder Dichtschnüre, nicht beherrschbar und müssen im übrigen ebenfalls über längere Zeit hinweg nachgetempert werden. Längere Temperungszeiten sind aber vor allem bei der Massenherstellung von Dichtungen höchst unerwünscht.

Aufgabe der Erfindung ist es, ein Verfahren zu schaffen, mit dem sich geschäumte oder auch ungeschäumte Silikonelastomere, also Silikonschaumstoffe oder Vollelastomere, bzw. daraus bestehende Erzeugnisse, wie vor allem Dichtelemente mit hochwertigen Eigenschaften, wie vor allem hohem elastischen Rückstellvermögen bei guter Festigkeit (Druck- und Zugfestigkeit) verfahrenstechnisch einfach und zuverlässig herstellen lassen, und zwar auch ohne übermäßig lange Temperungszeiten. Insbesondere wird mit der Erfindung die Herstellung von hochwertigen Silikondichtungen, wie vor allem Dichtringen, Dichtungsschnüren u.dgl. in situ angestrebt, wobei die Dichtelemente auch für den Einsatz in Bereichen, wie z.B. in der Kraftfahrzeugtechnik, bei Leuchten oder medizinischen Geräten u.dgl. verwendbar sein sollen, in denen sie besonderen thermischen Beanspruchungen ausgesetzt sind.

Die vorgenannte Aufgabe wird erfindungsgemäß dadurch gelöst, daß bei dem eingangs genannten Verfahren ein organischer Platinkatalysator verwendet wird, der, bezogen auf 1000g des in der Reaktionsmasse enthaltenen Silikonpolymers, zwischen 300 und 3000 ppm, vorzugsweise 300 bis 900 ppm, Platin enthält. Es wird dabei für das als Vernetzer verwendete SiH-haltige Siloxan ein solches mit einem SiH-Gehalt von 15 mmol/g verwendet. Nach der Erfindung wird ein zweikomponentiges, additionsvernetzendes Silikonsystem der genannten Art vorgesehen, das ein spezielles Katalysierungssystem, vorzugsweise in Kombination mit einem speziellen Vernetzersystem, aufweist. Während bei den herkömmlichen Verfahren Platinkatalysatoren mit einem Platingehalt von zumeist nur 30 ppm je kg Silikonpolymer Verwendung finden, arbeitet das erfindungsgemäße Verfahren mit einer um das 10 bis 100-fache größeren Dosierung des Platingehaltes. Überraschenderweise wurde gefunden, daß sich mit dieser Maßnahme ein geschäumtes oder ungeschäumtes Silikonelastomer-Erzeugnis mit unerwartet günstigen Eigenschaften erreichen läßt, das sich vor allem durch ein äußerst hohes elastisches Rückstellvermögen in der Größenordnung von 95 bis 100% bei zugleich hoher mechanischer Festigkeit (Druck- und Zugfestigkeit) und auch verbesserter chemischer Beständigkeit, insbesondere Ölbeständigkeit, auszeichnet und bei dessen Herstellung mit äußerst kurzen Temperungszeiten in der Größenordnung von 15 bis 20 min. bei Temperaturen im Bereich von 120° bis 200°C gearbeitet werden kann. In dieser Hinsicht optimale Ergebnisse lassen sich dabei erreichen, wenn als Vernetzer ein stark wirkendes Polyhydrogensiloxan mit 15 mmol/g SiH-Gehalt eingesetzt wird. Der Einsatz eines solchen Polyhydrogensiloxans bringt vor allem auch erhebliche Vorteile in Bezug auf die Reaktivität des Silikonsystems bei Raumtemperatur und bei der Herstellung eines geschäumten Silikonelastomers in Bezug auf die Schaumausbeute. Die durch den höheren Platingehalt sich ergebende Kostensteigerung ist im Verhältnis zu der mit der Erfindung stark verminderten Temperungs- bzw. Vernetzungszeit vernachlässigbar gering. Der Einfluß von etwaigen Inhibitoren, die die Reaktion bei Raumtemperatur in situ verlängern, z.B. eine erhöhte Vinylkonzentration (FIPFG) oder 2-Butinol (LSR) verhält sich dabei indifferent. Für das als Vernetzer verwendete Polyhydrogensiloxan, d.h. das SiH-haltige Polysiloxan, lassen sich die bekannten und handelsüblichen Wasserstoffsiloxane einsetzen, allerdings vorzugsweise solchen mit dem genannten hohen SiH-Anteil.

Soll ein geschäumtes Silikonelastomer, also ein Erzeugnis aus hochwertigem elastischen Silikonschaumstoff hergestellt werden, so empfiehlt es sich, der genannten Komponente A Wasser als Treibmittel zuzusetzen, zweckmäßig in einem Anteil von höchstens 2 Gew.%, bezogen auf die Menge an Silikonpolymer.

Bei dem erfindungsgemäßen Verfahren lassen sich die beiden genannten Komponenten des additionsvernetzenden, platinkatalysierten Silikonsystems mit Hilfe der gebräuchlichen Zweikomponenten-Misch- und Dosieranlagen verarbeiten, wie sie z.B. auch für die Polyurethanschaumstoffherstellung verwendet werden, wobei die aus dem geschäumten oder ungeschäumten Silikonelastomer bestehenden Erzeugnisse, wie vor allem die genannten Dichtelemente, in situ an den Bauteilen, wie z.B. Gehäuseteilen oder Gehäusedeckeln u. dgl., hergestellt werden können. Wie erwähnt, läßt sich auch die an die Aushärtung der Silikonmasse anschließende Temperung (Wärmebehandlung) auf eine betrieblich günstige und kostensparende Zeitdauer von etwa 15 bis 20 min. beschränken. Bedarfsweise kann eine Temperung nur für solche nach dem erfindungsgemäßen Verfahren hergestellte Silikonelastomere oder Erzeugnisse hieraus durchgeführt werden, deren maximale Einsatztemperatur im späteren Verwendungsfall oberhalb etwa 110°C liegt. Aus Verarbeitungsgründen werden die beiden genannten Komponenten des Silikonsystems zweckmäßig so zusammengestellt, daß sie sich im Mischungsverhältnis von 1:1 auf der Zweikomponenten-Misch- und Dosieranlage verarbeiten lassen.

Weitere Merkmale der Erfindung sind in den einzelnen Ansprüchen angegeben.

Im folgenden werden einige Beispiele für das erfindungsgemäße Verfahren angegeben.

### Beispiel 1

Ein ungeschäumtes Silikonelastomer (Vollelastomer) wird aus folgenden Komponenten hergestellt:

### Komponente A:

1000g Silikonpolymer mit mindestens zwei Vinylgruppen je Molekül.
3g organischer Platinkatalysator, enthaltend insgesamt 600 ppm Platin.
100g Zusatzstoffe, wie Füll- bzw. Verstärkungsstoffe, insbesondere pyrogene Kieselsäure.
20g Rußpaste.

### Komponente B (Vernetzerkomponente):

100g Silikonpolymer mit mindestens zwei Vinylgruppen je Molekül.
80g Zusatzstoffe, vorzugsweise pyrogene Kieselsäure.
60g Wasserstoff- bzw. Polyhydrogensiloxan, z.B. Dimethylhydrogensiloxan, mit einem SiH-Gehalt von 15 mmol/g.

Die beiden vorgenannten Komponenten A und B werden im Mischungsverhältnis 1:1 mittels einer Zweikomponenten-Misch- und Dosieranlage gemischt und auf ein Bauteil, z.B. einen Ventildeckel, einen Zylinderkopfdeckel od.dgl. als Dichtungsraupe aufgetragen. Anschließend wird das Bauteil direkt in einem Durchlauftrockner über eine Zeitdauer von 15 min. bei einer Temperatur von +150°C getempert.
Die so hergestellte Dichtung bzw. das mit der Dichtung versehene Bauteil kann unmittelbar nach dem Temperungsvorgang verbaut werden. Die Werte in Bezug auf das elastische Rückstellvermögen der Silikonelastomerdichtung betragen 100% (nach DIN 53517). Die Rückstellwerte dieser Dichtung in Kontakt mit Kühlwasser eines Kraftfahrzeugs liegen bei 95 bis 100%. Bei Ölkontakt der Dichtung können die Werte bei agressiven Medien oder bei sehr hohen Temperaturen und langen Verweilzeiten etwas geringer sein. Auch unter ungünstigsten Einsatzbedindungen liegt das Rückstellvermögen der Dichtung stets über 65%.
Die nach dem vorgenannten Verfahren hergestellte Silikondichtung kann mit besonderem Vorteil im Kraftfahrzeugbau und auch dort überall verwendet werden, wo die Dichtung im Einsatz hohen mechanischen Beanspruchungen und/oder thermischen Belastungen ausgesetzt ist.

### Beispiel 2

Ein geschäumtes Silikonelastomer, das z.B. als Dichtung im Kraftfahrzeugbau, z.B. als Dichtungsschnur bei Zündkabelabdeckungen u.dgl., verwendbar ist, wird aus folgenden Komponenten hergestellt:

### Komponente A:

1000g Silikonpolymer mit mindestens zwei Vinylgruppen je Molekül.
6g organischer Platinkatalysator, enthaltend insgesamt 1200 ppm Platin.
2g Wasser (Treibmittel).
100g pyrogene Kieselsäure.
20g Rußpaste.

### Komponente B:

1000g Silikonpolymer mit mindestens zwei Vinylgruppen je Molekül.
80g pyrogene Kieselsäure.
120g Polyhydrogensiloxan mit einem SiH-Gehalt von
15 mmol/g.

Die vorgenannten Komponenten A und B werden mittels einer Zweikomponenten-Misch- und Dosieranlage im Mischungsverhältnis 1:1 gemischt und in situ als Raupe auf das die Dichtung tragende Bauteil aufgetragen. Der Ausschäumungsprozeß ist bei Raumtemperatur in wenigen Minuten abgeschlossen. Es erfolgt dann eine Temperung über eine Zeitdauer von 20 min. bei +140°C. Vorzugsweise erfolgt die Temperung im Durchlauf des die Dichtung tragenden Bauteils durch einen Durchlaufofen. Das elastische Rückstellvermögen der so erhaltenen Dichtung beträgt bei einer Einsatztemperatur von 140°C 100% (nach DIN 53572).

### Beispiel 3:

Die Herstellung eines ungeschäumten Silikonelastomers (Silikon-Vollelastomer) erfolgt nach Beispiel 1, jedoch mit der Maßgabe, daß dem hier angegebenen additionsvernetzenden Silikonsystem ein an sich bekannter Vinylinhibitor zugesetzt wird, welcher die Topfzeit von etwa 30 sek. auf etwa 5 min. (durch Veränderung des SiH/Vinyl-Verhältnisses) erhöht. Die Temperung erfolgt hier über eine Zeitdauer von 15 min. bei 150°C. Bei einer Einsatztemperatur von +150°C wurde eine elastische Rückstellung von 100% gemessen (nach DIN 53572).

### Beispiel 4:

Ein ungeschäumtes Silikonelastomer mit auf etwa 3 Tage verlängerter Topfzeit bei Raumtemperatur (LSR-Qualität) wurde wie folgt hergestellt:

### Komponente A:

Entsprechend Beispiel 1, zusätzlich jedoch mit 3g Butinol als Inhibitor.

### Komponente B:

Gemäß Beispiel 1.

Nach Aushärtung erfolgte eine Temperung bei 180°C über eine Temperungszeit von 20 min. Die elastische Rückfederung bei einer Einsatztemperatur von +180°C lag oberhalb 95% (nach DIN 53517).

Bei den vorstehend angegebenen Beispielen kann selbstverständlich mit unterschiedlichen Zusatzstoffen (Füll-, Verstärkungs-, Verdickungs- und/oder Alterungsschutzmitteln, Farbpigmente usw.) und auch mit unterschiedlichen Mengenanteilen der Zusatzstoffe gearbeitet werden, vorzugsweise in Mengenanteilen von 0 bis 350g. Im Beispiel 2 kann die als Treibmittel zugesetzte Wassermenge bei 1 bis 20g liegen. Das im Beispiel 1 in der Komponente B angegebene Wasserstoffsiloxan kann in einer Menge bis höchstens 100g zugesetzt werden, vorzugsweise in einer Menge von 40 bis 80g. Im Beispiel 2 sollte das in der Komponente B genannte Wasserstoffsiloxan in einer Menge von mindestens 100g zugesetzt werden. Hier liegt der zweckmäßige Mengenbereich bei 100 bis 200g.

Um die mit der Erfindung erzielten Vorteile deutlich zu machen, wurden die in den nachfolgenden Beispielen angegebenen Gegenversuche durchgeführt:

### Beispiel 5:

Es wurde ein ungeschäumtes Silikonelastomer auf der Basis der Rezeptur nach Beispiel 1 hergestellt, jedoch mit der Maßgabe, daß für den Platinkatalysator ein solcher mit einem Platin-Gehalt von 30 ppm je 1000g Silikonpolymer (anstelle von 300 ppm) eingesetzt wurde. Die Temperung erfolgte hier bei 150°C über eine Zeitdauer von 20 min.

Die gemessene elastische Rückstellung des Silikonelastomers betrug bei einer Einsatztemperatur von 150°C (nach DIN 53572) 0%. Es war hier also keine Rückstellung gegeben. Eine elastische Rückstellung im Größenbereich von 95% bis 100% war vielmehr erst nach einer Temperungszeit von 4 bis 8 Stunden bei +150°C gegeben.

### Beispiel 6:

Es wurde ein Silikonschaum auf der Basis der Rezeptur nach Beispiel 2 hergestellt, jedoch mit der Maßgabe, daß für das im Beispiel 2 angegebene Wasserstoffsiloxan ein solches mit einem SiH-Gehalt von 4,3 mmol/g eingesetzt wurde. Nach der Aushärtung wurde eine Temperung bei 150°C über 20 min. durchgeführt. Die anschließend bestimmte elastische Rückfederung des Silikonschaums betrug zwar etwa 100% bei +150°C (nach DIN 53572), jedoch verlängerte sich die Topfzeit bei Raumtemperatur erheblich. Auch war die Schaumausbeute geringer. Außerdem wies dieser Silikonschaum eine deutlich verminderte Ölbeständigkeit und auch schlechtere mechanische Festigkeitswerte auf.

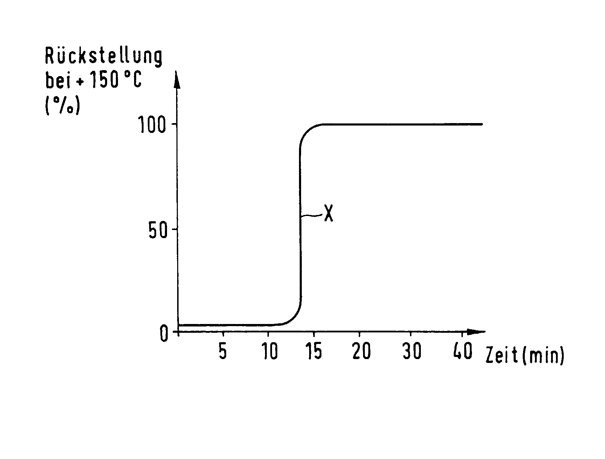

Aus den Versuchsergebnissen wurde das in der Zeichnung dargestellte Diagramm erstellt, das die Abhängigkeit des elastischen Rückstellvermögens der nach den Beispielen 1 und 2 hergestellten Silikonelastomere in Abhängigkeit von der Temperungs- bzw. Wärmebehandlungszeit t bei einer durchschnittlichen Temperungstemperatur von +150°C zeigt. Aus dem Verlauf der Kurve X ist erkennbar, daß bei den Rezepturen nach den Beispielen 1 und 2 das optimale Rückstellvermögen bei einer Temperungszeit zwischen 10 und 15 min. erreicht wird, wobei dieser Zeitwert in einer gewissen Abhängigkeit von der Masse des der Temperung unterworfenen Silikonelastomers und auch von der Art der Ofenanlage steht. Temperungszeiten oberhalb 20 min. bringen bezüglich des Rückstellvermögens keine Verbesserungen.

Ferner konnte festgestellt werden, daß bei Temperungszeiten von 20 min. die günstigste Temperungstemperatur der maximalen Einsatztemperatur der Silikondichtung entsprechen sollte, und zwar für den Einsatz-Temperaturbereich von 110°C bis 200°C. Wenn im Einsatz der Silikondichtung eine maximale Einsatztemperatur von etwa +110°C nicht überschritten wird, ist eine Temperung in der Regel nicht erforderlich. Bei Einsatztemperaturen oberhalb +200°C ist eine Temperung über 20 min. bei einer Temperungstemperatur von +200°C ausreichend. Einsatztemperaturen oberhalb 200°C, z.B. von etwa +240°C werden z.B. bei Verwendung der Silikondichtungen für Gehäuseabdichtungen von Halogenstrahlern bzw. Halogenleuchten erreicht.

Insgesamt ergibt sich, daß mit dem erfindungsgemäß vorgeschlagenen Katalysatorsystem mit hohem Platingehalt in Verbindung mit einem stark wirkenden Polyhydrogensiloxan die Temperungszeiten überraschend stark verkürzt werden können und dabei außerordentlich hochwertiges Silikonelastomer bzw. Silikonelastomer-Erzeugnisse erhalten werden, die den vor allem bei Dichtungen gestellten hohen Anforderungen voll genügen.

Bei dem erfindungsgemäßen Verfahren können für das Siloxan mit einem hohen SiH-Gehalt handelsübliche Siloxane verwendet werden, z.B. "Baysilone MH 15" der Firma Bayer AG.

Die gute Mineralölbeständigkeit des nach dem erfindungsgemäßen Verfahren hergestellten Silikonelastomers ergibt sich aus der nachfolgenden Tabelle, die sich auf das nach Beispiel 1 hergestellte Silikonelastomer bezieht, wobei in der Spalte "Ausgangszustand" die Ursprungseigenschaften des Silikonelastomers und unter der Spalte "nach Lagerung" die Eigenschaften dieses Silikonelastomers nach einer Lagerung über eine Zeitdauer von 7 Tagen bei 100°C in Öl (ASTM-Öl Nr. 2) angegeben sind:

| Eigenschaften | Nach Lagerung | Ausgangszustand |
|---|---|---|
| Shore A | 65 | 68 |
| Volumenänderung | + 8 % | - |
| Reißfestigkeit | 7,0 N/mm² | 7,5 N/mm² |
| Reißdehnung | 104 % | 102% |

Wie die Tabelle ausweist, weist das Silionmaterial ein besonders hohes Niveau an Ölbeständigkeit auf.

## Patentansprüche

1. Verfahren zum Herstellen eines geschäumten oder ungeschäumten Silikonelastomers mit hohem elatischen Rückstellvermögen, unter Verwendung eines zweikomponentigen, additionsvernetzenden und platinkatalysierten Silikonsystems, wobei die Komponente (A), enthaltend
Silikonpolymer mit mindestens 2 Vinylgruppen je Molekül, einen organischen Platinkatalysator, sowie gegebenenfalls weitere Zusätze,
mit der Vernetzerkomponente (B), enthaltend
Polyhydrogensiloxan und gegebenenfalls weitere Zusätze
mittels einer Zweikomponenten-Misch- und Dosieranlage verarbeitet und in situ zur Reaktion gebracht werden, gekennzeichnet durch die Kombination folgender Merkmale:
- es wird ein organischer Platinkatalysator verwendet, der, bezogen auf 1000 g des in der Reaktionsmasse enthaltenen Silikonpolymers, zwischen 300 und 3000 ppm Platin enthält;
- als Polyhydrogensiloxan wird ein solches mit einem SiH-Gehalt von 15 mmol/g verwendet;
- das Silikon-Elastomer bzw. das hieraus bestehende Erzeugnis wird einer Temperung über eine Zeitdauer von 15 bis 20 min. bei einer Temperatur von 120°C bis 200°C unterworfen.

2. Verfahren nach Anspruch 1, **dadurch gekennzeichnet, daß** als Polyhydrogensiloxan Dimethylhydrogensiloxan verwendet wird.

3. Verfahren nach Anspruch 1 oder 2, **dadurch gekennzeichnet, daß** zur Herstellung eines geschäumten Silikonelastomers der Komponente(A) Wasser als Treibmittel zugesetzt wird in einer Menge von höchstens 2 Gew.-%, bezogen auf die Menge an Silikonpolymer.

4. Verfahren nach einem der Ansprüche 1 bis 3, **dadurch gekennzeichnet, daß** dem additionsvernetzenden Silikonsystem zur Einstellung der Topfzeit bei Raumtemperatur ein Vinylinhibitor zugesetzt wird.

5. Verfahren nach einem der Ansprüche 1 bis 4, **dadurch gekennzeichnet, daß** die Komponenten (A) und (B) im Mischungsverhältnis von 1 : 1 auf der Zweikomponenten-Misch- und Dosieranlage verarbeitet werden, wobei jede der beiden Komponenten Silikonpolymer mit mindestens zwei Vinylgruppen je Molekül sowie gegebenenfalls weitere Zusätze enthält.

6. Verfahren nach einem der Ansprüche 1 bis 5, **dadurch gekennzeichnet, daß** ein ungeschäumtes SilikonpolymerErzeugnis hergestellt wird aus der Komponente (A), enthaltend
1000g Silikonpolymer mit mindestens zwei Vinylgruppen je Molekül,
einen organischen Platinkatalysator, enthaltend insgesamt 600 ppm Platin,
0 bis 300g Füll- oder Verstärkungsstoffe
0 bis 20g Rußpaste
und der Vernetzerkomponente (B), enthaltend
1000g Silikonpolymer mit mindestens zwei Vinylgruppen je Molekül,
40 bis 80g Polyhydrogensiloxan mit einem SiH-Gehalt von 15 mmol/g,
0 bis 300g Zusatzstoffe,
wobei die Komponenten (A) und (B) mittels einer Zweikomponenten-Misch- und Dosieranlage gemischt und z.B. in Form einer Raupe auf ein Bauteil aufgebracht und das Bauteil anschließend der Temperung unterworfen wird.

7. Verfahren nach einem der Ansprüche 1 bis 5, **dadurch gekennzeichnet, daß** ein geschäumtes Silikonelastomer-Erzeugnis hergestellt wird aus der Komponente (A), enthaltend
1000g Silikonpolymer mit mindestens zwei Vinylgruppen je Molekül,
6g organischen Platinkatalysator enthaltend insgesamt mindestens 1200 ppm Platin,
1 bis 20g Wasser (Treibmittel),
0 bis 300g Zusatzstoffe,
wobei die Komponenten (A und B) mittels einer Zweikomponenten-Misch- und Dosieranlage verarbeitet und auf ein Bauteil, z.B. als Gehäuse- oder Deckeldichtung, aufgebracht und in situ zur Aufschäumung gebracht wird, worauf eine Temperung durchgeführt wird.

8. Anwendung des Verfahrens nach einem oder mehreren der Ansprüche 1 bis 7 für die Herstellung von thermisch belasteten Dichtungen, wie vor allem Deckel- oder Gehäusedichtungen.

## Claims

1. A process for producing a foamed or non-foamed silicone elastomer having a high elastic restoring capacity, using a two-component, addition-crosslinking and platinum-catalysed silicone system, wherein component (A), containing
a silicone polymer comprising at least 2 vinyl groups per molecule, an organic platinum catalyst, and optionally other additives also,
is processed with crosslinking component (B), containing
polyhydrogen siloxane and optionally other additives also,
by means of a two-component mixing and proportioning unit and is reacted in situ, characterised by the combination of the following features:
- an organic platinum catalyst is used which contains between 300 and 3000 ppm platinum with respect to 1000 g of the silicone polymer contained in the reaction mass;
- a polyhydrogen siloxane with an SiH content of 15 mmoles/g is used as the polyhydrogen siloxane;
- the silicone elastomer or the product produced therefrom is subjected to an annealing operation at a temperature of 120°C to 200°C for a period of 15 to ²0 minutes.

2. A process according to claim 1, **characterised in that** dimethyl hydrogen siloxane is used as the polyhydrogen siloxane.

3. A process according to claim 1 or 2, **characterised in that** in order to produce a foamed silicone elastomer water is added to component (A) as a foaming agent, in an amount of 2 % by weight at most with respect to the amount of silicone polymer.

4. A process according to any one of claims 1 to 3, **characterised in that** a vinyl inhibitor is added to the addition-crosslinking silicone system in order to adjust the pot life at room temperature.

5. A process according to any one of claims 1 to 4, **characterised in that** components (A) and (B) are processed in a mixture ratio of 1 : 1 in the two-component mixing and proportioning unit, wherein each of the two components contains a silicone polymer comprising at least two vinyl groups per molecule, and optionally other additives also.

6. A process according to any one of claims 1 to 5, **characterised in that** a non-foamed silicone polymer product is produced from component (A), containing
1000 g silicone polymer comprising at least two vinyl groups per molecule, an organic platinum catalyst, containing a total of 600 ppm platinum,
0 to 300 g fillers or reinforcing agents,
0 to 20 g carbon black paste,
and crosslinking component (B), containing
1000 g silicone polymer comprising at least two vinyl groups per molecule,
40 to 80 g polyhydrogen siloxane with an SiH content of 15 mmoles/g,
0 to 300 g additive substances,
wherein components (A) and (B) are mixed by means of a two-component mixing and proportioning unit and are applied, e.g. in the form of a bead, to a component, and the component is subsequently subjected to an annealing operation.

7. A process according to any one of claims 1 to 5, **characterised in that** a foamed silicone elastomer is produced from component (A), containing
1000 g silicone polymer comprising at least two vinyl groups per molecule,
6 g organic platinum catalyst containing a total of at least 1200 ppm platinum,
1 to 20 g water (foaming agent),
0 to 300 g additive substances,
wherein components (A) and (B) are processed by means of a two-component mixing and proportioning unit and are applied, e.g. as a housing or cover seal, to a component and are foamed in situ, whereupon an annealing operation is performed.

8. Application of the process according to one or more of claims I to 7 to the production of thermally stressed seals, such as primarily cover or housing seals.

## Revendications

1. Procédé de préparation d'un élastomère de silicone, alvéolaire ou non alvéolaire, ayant une reprise élastique élevée, avec utilisation d'un système silicone à deux composants, réticulant par addition et avec catalyse au platine, le composant (A) contenant
un polymère silicone ayant au moins 2 groupes vinyle par molécule, un catalyseur organique au platine, ainsi que, le cas échéant, d'autres additifs,
et le composant de réticulation (B) contenant
du polyhydrogène siloxane et, le cas échéant, d'autres additifs
travaillés au moyen d'une installation de mélange et de dosage pour deux composants, et mis en réaction in situ, caractérisé par la combinaison des propriétés ci-après :
- on utilise un catalyseurs organique au platine qui contient, en se référant à 1000 g du polymère de silicone contenu dans la masse de réaction, entre 300 et 3000 ppm de platine;
- on utilise comme polyhydrogène siloxane un polyhydrogène siloxane ayant une teneur en SiH de 15 mmol/g;
- l'élastomère au silicone, ou le produit constitué à partir de celui-ci, est soumis à un équilibrage de température sur une durée de 15 à 20 min. à une température de 120 C à 200 °C.

2. Procédé selon la revendication 1, caractérisé en ce qu'on utilise, comme polyhydrogène siloxane, du diméthylhydrogène siloxane.

3. Procédé selon la revendication 1 ou 2, caractérisé en ce que, pour fabriquer un élastomère au silicone alvéolaire, on ajoute au composant (A) de l'eau à titre d'agent moussant, en une quantité maximale de 2 % en poids par rapport à la quantité de polymère au silicone.

4. Procédé selon l'une des revendications 1 à 3, caractérisé en ce qu'on ajoute au système silicone réticulant par addition, pour régler la durée de conservation en pot à la température ambiante, un inhibiteur au vinyle.

5. Procédé selon l'une des revendications 1 à 4, caractérisé en ce que les composants (A) et (B) sont travaillés selon le rapport de mélange de 1 : 1 sur l'installation de mélange et de dosage pour deux composants, chacun des deux composants contenant du polymère silicone comportant au moins deux groupes vinyle par molécule, ainsi que, le cas échéant, d'autres additifs.

6. Procédé selon l'une des revendications 1 à 5, caractérisé en ce qu'on fabrique un produit non alvéolaire à base de polymère au silicone, à partir du composant (A), contenant
1000 g de polymère au silicone avec au moins deux groupes vinyle par molécule,
un catalyseur organique au platine contenant au total 600 ppm de platine,
de 0 à 300 g de charge ou de substances de renforcement
de 0 à 20 g de pâte de suie,
et le composant réticulant (B) contenant
1000 g de polymère au silicone comportant au moins deux groupes vinyle par molécule,
40 à 80 g de polyhydrogène siloxane ayant une teneur en SiH de 15 mmol/g,
de 0 à 300 g d'additifs
les composants (A) et (B) étant mélangés au moyen de l'installation de mélange et de dosage pour deux composants et par exemple appliqués sur une pièce de construction, sous la forme d'une chenille, et la pièce de construction étant ensuite soumise à l'équilibrage de température.

7. Procédé selon l'une des revendications 1 à 5, caractérisé en ce que l'on fabrique un produit alvéolaire à base d'élastomère au silicone, à partir du composant (A), contenant
1000 g de polymère au silicone ayant au moins deux groupes vinyle par molécule,
6 g de catalyseur organique au platine contenant au total au moins 1200 ppm de platine,
1 à 20 g d'eau (agent moussant),
0 à 300 g d'additifs,
les composants (A et B) étant travaillés au moyen d'une installation de mélange et de dosage pour deux composants et appliqués sur une pièce de construction, par exemple sous la forme d'un joint d'étanchéité pour carter ou pour couvercle, et mis à mousser in situ, suite à quoi est effectué un équilibrage de température.

8. Application du procédé selon l'une ou plusieurs des revendications 1 à 7 pour la fabrication de joints d'étanchéité sollicités thermiquement, tels que des joints d'étanchéité pour couvercle ou carter.
